# EUROPÄISCHE PATENTANMELDUNG

(11) **EP 1 689 125 A1**
(43) Veröffentlichungstag der Anmeldung: **09.08.2006**
(21) Anmeldenummer: 05002603.8
(22) Anmeldetag: 08.02.2005
(51) Int. Cl.: H04L 12/28, H04L 29/06

(54) **Verfahren zum authentisierten Aufbau einer Verbindung**

(71) Anmelder: SIEMENS AKTIENGESELLSCHAFT, 80333 München (DE)
(72) Erfinder: Falk, Rainer, Dr., 85586 Poing (DE); Kröselberg, Dirk, 80469 München (DE)

(57) **Zusammenfassung**

Die Erfindung betrifft ein Verfahren zum authentisierten Aufbau einer Verbindung zwischen einem Funkteilnehmer und einem WLAN-Funkkommunikationssystem.

Der Funkteilnehmer meldet sich über eine ungesicherte Verbindung oder über eine gesicherte, nur netzseitig authentifizierte Verbindung zu einem Zugangspunkt des WLAN-Netzes als Gast an (51), wobei dem Funkteilnehmer eine individuelle IP-Adresse zugeordnet wird (52). Unter Verwendung der individuellen IP-Adresse greift der Funkteilnehmer auf eine Portalseite zu und authentifiziert sich personenbezogen gegenüber der Portalseite (53). Unter Verwendung einer Security Assertion Markup Language werden dem Funkteilnehmer personenbezogene Authentifizierungsdaten zugeordnet (54). Die personenbezogenen Authentifizierungsdaten werden bei einem neuen Verbindungsaufbau (57) im Rahmen einer gesicherten Link-Layer-Verbindung an einen AAA-Server zur abschließenden Authentifizierung (58) des Funkteilnehmers übertragen.

## Beschreibung

Die Erfindung betrifft ein Verfahren zum authentisierten Aufbau einer Verbindung zwischen einem Funkteilnehmer und einem WLAN-Funkkommunikationssystem gemäß dem Oberbegriff des Anspruchs 1.

Es sind WLAN-Funkkommunikationssysteme bekannt, bei denen Funkteilnehmer über ungesicherte Verbindungen Daten mit einem WLAN-Zugangspunkt austauschen.

Weiter sind als "Public-WLAN, PWLAN" bezeichnete Funkkommunikationssysteme bekannt, die beispielsweise durch Hotels, Flughäfen und ähnlichen Anbietern betrieben werden. Gegen Entrichtung von Benutzungsgebühren kann ein Funkteilnehmer spezielle Dienstleistungen in Anspruch nehmen, die vom jeweiligen Anbieter zur Verfügung gestellt werden. Aufgrund der zu entrichtenden Benutzungsgebühren gewinnen Verfahren für einen sicheren Zugriff auf das WLAN- bzw. PWLAN-Netz sowie für eine gesicherte Datenübertragung zunehmend an Bedeutung.

Nachfolgend werden zwei Verfahren für einen berechtigten Zugriff eines Funkteilnehmers auf ein PWLAN-Netz bzw. WLAN-Netz beschrieben.

Bei einem ersten Verfahren, das als "Universal Access Method, UAM" bekannt ist, greift ein Funkteilnehmer auf einen als "Access Point" bezeichneten Zugangspunkt des Netzes ohne Schutz der Verbindung zu.

Der Funkteilnehmer sendet nach Aufbau einer lokalen IP-Verbindung eine HTTP-Anfrage an den Access Point, die zu einer HTML-Portalseite weitergeleitet wird. Die HTML-Portalseite wird beispielsweise durch einen HTTP-Server oder durch ein "Service Selection Gateway, SSG" oder durch eine andere entsprechende Einrichtung zur Verfügung gestellt.

Die HTML-Portalseite zeigt spezifische Informationen des Netzes an - beispielsweise werden angebotene Internetdienste mit jeweiligen Benutzungsgebühren angezeigt. Durch die HTML-Portalseite kann außerdem ein Zugangscode abgefragt werden, der beispielsweise aus einem Benutzernamen und/oder Passwort besteht. In einem Hotel ist es beispielsweise üblich, durch Kauf einer "Prepaid"-Karte einen auf die Karte aufgedruckten Zugangscode zu erwerben. Dadurch ist es nicht möglich, eine netzseitige Aussage über die Person des Funkteilnehmers zu treffen.

Nach Eingabe des Zugangscodes über die HTML-Portalseite erfolgt durch eine Einrichtung, die der HTML-Portalseite zugeordnet ist, eine Überprüfung des Zugangscodes. Wird der Funkteilnehmer als berechtigt anerkannt werden Filter gebildet, die dem Funkteilnehmer den Zugriff auf die angebotenen Internetdienste erlauben. Nach Ablauf einer beim Kauf der Prepaid-Karte vorbestimmten Benutzungszeit werden diese Filter entfernt und ein weiterer Zugriff damit unterbunden.

Bei einem zweiten Verfahren wird ein Protokoll verwendet, das als "Extensible Authentication Protocol, EAP" bezeichnet wird. Dabei authentifiziert ein Heimatnetzwerk, bei dem der Funkteilnehmer bekannt bzw. angemeldet ist, gegenüber einem anfragenden PWLAN-Netz bzw. WLAN-Netz den Funkteilnehmer, dem nachfolgend der Zugriff auf das PWLAN-Netz bzw. WLAN-Netz erlaubt wird. Dieses Verfahren bietet beispielsweise den Vorteil einer netzübergreifenden Gebührenabrechnung, wobei auf zusätzliche Gebührenmittel wie die oben genannte "Prepaid"-Karte oder ähnliches verzichtet werden kann.

Im Einzelnen meldet sich der Funkteilnehmer als Gast bei einem Zugangspunkt bzw. Access Point des WLAN/PWLAN-Netzes an. Dazu sendet er unter Verwendung eines so genannten "Protected Extensible Authentication Protocol - Transport Layer Security, PEAP-TLS" zur Authentifizierung eine "Null" als Benutzernamen über eine gesicherte Verbindung. Weitere Eingaben zur Authentifizierung sind nicht nötig. Somit führt der Funketeilnehmer eine anonyme, nicht personenbezogene Authentifizierung durch.

Netzseitig wird, beispielsweise unter Verwendung eines so genannten "Internet Authentication Service, IAS", die Authentifizierung des Funkteilnehmers als Gast erkannt.
Näheres zum Thema "IAS" ist beispielsweise unter dem Internetlink
www.microsoft.com/windows2000/technologies/communications/ias/ angegeben.

Dem Funkteilnehmer wird ein "Uniform Resource Locator, URL" als Adresse zugeordnet, die einen "Provisioning"-Server bezeichnet. Durch den Provisioning-Server werden dem Funkteilnehmer Datenzugriffe ermöglicht bzw. werden Ressourcen zugeteilt.

Die URL-Adresse wird unter Verwendung des oben genannten "PEAP-TLS" geschützt an den Funkteilnehmer übertragen. Zusätzlich wird dem Funkteilnehmer eine individuelle IP-Adresse zugeordnet und mitgeteilt.

Die Zuordnung dieser IP-Adresse erfolgt beispielsweise unter Verwendung des so genannten "Dynamic Host Configuration Protocol, DHCP", das eine dynamische Zuordnung eines Endgeräts zu IP-Adressen eines Netzes ermöglicht. Ein betrachtetes Funkteilnehmer-Endgerät kann damit für verschiedene Netzverbindungen jeweils verschiedene IP-Adressen aufweisen.

Es ist bekannt, ein "Hypertext Transfer Protocol, HTTP" über eine gesicherte Verbindungen zu übertragen wobei zur Sicherung eine "Transport Layer Security, TLS" oder ein "Secure Socket Layer, SSL" verwendet wird. Eine derartige gesicherte Verbindung zur Übertragung des HTTP-Protkolls wird als HTTPS-Verbindung bezeichnet.

Der Funkteilnehmer wird über eine gesicherte HTTPS-Verbindung mit einem netzseitigen HTTP-Server verbunden, von dem spezifische Daten des Funkteilnehmers, wie beispielsweise Name, Adresse, Kreditkarteninformationen oder ähnliches, abgefragt werden.

Für diese Abfrage kann beispielsweise ein "Wireless Provisioning Service, WPS" verwendet werden. Näheres zu "WPS" ist beispielsweise unter dem Internetlink
www.microsoft.com/technet/community/columns/cableguy/cg1203.mspx angegeben.

Seitens des HTTP-Servers wird unter Berücksichtigung der abgefragten Funkteilnehmerdaten ein als "User Account" bezeichnetes Benutzerprofil gebildet. Das Benutzerprofil wird an den Funkteilnehmer übertragen, wobei das Benutzerprofil als "Credentials" bezeichnete Authentifizierungsdaten beinhaltet.

Nach Erhalt der Authentifizierungsdaten wird die bisherige Verbindung zum Access Point beendet. Bei einer nachfolgenden neuen Verbindung zum Zugangspunkt übermittelt der Funkteilnehmer die ihm zugeordneten Authentifizierungsdaten.

Netzseitig wird unter Verwendung des "Internet Authentication Service, IAS" der Funkteilnehmer unter Verwendung seiner "Credentials" authentifiziert. Abschließend werden netzseitige Filter gebildet, die dem Funkteilnehmer den Zugriff auf jeweils angebotene Internetdienste erlauben.

Es ist Aufgabe der vorliegenden Erfindung, ein Verfahren zur Authentifizierung eines Funkteilnehmers bei einem WLAN- bzw. PWLAN-Netz anzugeben, das mit geringerem Aufwand und erhöhter Sicherheit durchführbar ist.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren werden Sicherheitsmaßnahmen einer dem Funkteilnehmer individuell zugeordneten und als "Application-Layer" bezeichneten Dienstebene bzw. Anwendungsschicht und einer dem Funkteilnehmer nicht individuell zugeordneten und als "Link-Layer" bezeichneten Verbindungsebene bzw. Verbindungsschicht miteinander kombiniert.

Die "Link-Layer"-Sicherheit wird durch Verwendung des eingangs beschriebenen "Extensible Authentication Protocol, EAP" realisiert.

Die "Application-Layer"-Sicherheit wird durch Verwendung einer so genannten "Security Assertion Markup Language, SAML" realisiert, die bevorzugt ein Rahmenprotokoll mit einer "Extensible Markup Language, XML" verwendet. Unter dem Begriff "SAML" ist ein Verfahren zum Austausch von Informationen zur Authentifizierung, zur Autorisierung und zur so genannten "Nonrepudiation" definiert.

Mit Hilfe der "Nonrepudiation"-Informationen wird gewährleistet, dass eine gesendete Nachricht eindeutig einer sendenden Partei zugeordnet werden kann bzw. dass ein Empfänger einer Nachricht eindeutig nachgewiesen werden kann.

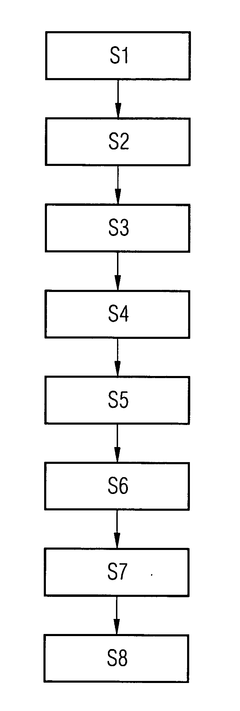

Nachfolgend wird die Erfindung anhand einer Figur FIG 1 schrittweise erläutert.

In einem ersten Schritt S1 meldet sich der Funkteilnehmer über einen Access Point bei einem WLAN-Netz bzw. bei einem PWLAN-Netz als Gast an, indem er beispielsweise lediglich eine "Null" als Benutzernamen ungesichert überträgt.

In einem zweiten Schritt S2 wird seitens eines netzseitigen "**A**uthorization,**A**uthentication,**A**ccounting, AAA"-Servers die Anmeldung erkannt. Dem Funkteilnehmer wird unter Verwendung des "Dynamic Host Configuration Protocol, DHCP" eine IP-Adresse individuell zugeordnet, die an den Funkteilnehmer übertragen wird.

Seitens des AAA-Servers wird im Rahmen der als "Authorization" bezeichneten Berechtigungsüberprüfung festgelegt, auf welche angebotenen Dienste der Funkteilnehmer zugreifen darf. Abhängig von einem dem Funkteilnehmer zugeordneten "User Authorization Level" wird dem Funkteilnehmer eine vorbestimmte Informationsmenge zur Verfügung gestellt. Im Rahmen eines als "**A**uthentication" bezeichneten Anmeldungsvorgangs wird üblicherweise für jeden Funkteilnehmer eine Kombination aus Benutzername und Passwort verwendet. Im Rahmen eines als "**A**ccounting" bezeichneten Abbuchungsverfahrens werden Zugriffszeiten und Zugriffe auf Internetseiten registriert. Mit Hilfe der erfassten "Accounting"-Daten wird ermöglicht, Trendanalysen, Kapazitätsplanungen, Gebührenberechnungen, Kostenzuordnungen und Systemprüfungen durchzuführen.

In einem dritten Schritt S3 stellt der Funkteilnehmer eine nur seitens des Servers authentifizierte gesicherte Verbindung zu einer Server-Portalseite her und authentifiziert sich gegenüber dieser Portalseite über diese gesicherte Verbindung.

Zur Authentifizierung könnte der Funkteilnehmer beispielsweise eine auf seine Person bezogene Kombination aus Benutzernamen und Passwort verwenden. Alternativ wäre es auch möglich, eine auf einem Zertifikat basierende und auf die Person des Funkteilnehmers bezogene Authentifizierung durchzuführen. Die Kommunikation mit der Portalseite wird dabei beispielsweise unter Verwendung des HTTPS-Protokolls gesichert durchgeführt.

In einem vierten Schritt S4 werden seitens des Portalseiten-Servers dem Funkteilnehmer so genannte "Credentials" als Authentifizierungsdaten zugeordnet.

Erfindungsgemäß wird dazu ein sogenanntes "SAML Assertion" bzw. SAML-Erklärung oder ein "SAML Artefact" bzw. SAML-Prüfungszertifikat verwendet. Sowohl das "SAML-Artefact" als auch die "SAML-Assertion" sind entweder direkt oder indirekt der Person des Funkteilnehmers zuordenbar.

Bei der "Security Assertion Markup Language, SAML" wird eine so genannte "Asserting-Party" für eine durchzuführende Bestätigung und eine so genannte "Relying-Party" für eine durchzuführende Zuverlässigkeitsprüfung definiert. Als "Asserting-Party" wird die Server-Portalseite verwendet, während als "Relying-Party" der AAA-Server verwendet wird.

In einem fünften Schritt S5 werden die "Credentials" unter Verwendung des HTTPS-Protokolls zum Funkteilnehmer gesichert übertragen und in einem sechsten Schritt S6 die aktuelle Verbindung beendet.

In einem siebten Schritt S7 wird seitens des Funkteilnehmers über den Access Point eine neue Link-Layer-Verbindung zum AAA-Server aufgebaut.

In einem achten Schritt S8 authentifiziert sich der Funkteilnehmer gegenüber dem AAA-Server durch Übermittlung der "Credentials", also des "SAML-Artifact" oder der "SAML-Assertion".

Die Authentifizierung wird unter Verwendung des EAP-Protokolls durchgeführt - d.h. ein Heimatnetzwerk, bei dem der Funkteilnehmer bekannt bzw. angemeldet ist, authentifiziert gegenüber dem anfragenden AAA-Server des WLAN/PWLAN-Netzes den Funkteilnehmer. Diesem wird nach erfolgter Authentifizierung der Zugriff auf das WLAN/PWLAN-Netz erlaubt, indem entsprechende Filter für einen Zugang zu den angebotenen Internetdiensten gebildet werden.

## Patentansprüche

1. Verfahren zum authentisierten Aufbau einer Verbindung zwischen einem Funkteilnehmer und einem WLAN-Funkkommunikationssystem,
- bei dem sich der Funkteilnehmer über eine ungesicherte Verbindung oder über eine gesicherte, nur netzseitig authentifizierte Verbindung zu einem Zugangspunkt des WLAN-Netzes als Gast anmeldet und dem Funkteilnehmer eine individuelle IP-Adresse zugeordnet wird,
- bei dem der Funkteilnehmer unter Verwendung der individuellen IP-Adresse auf eine Portalseite zugreift und der Funkteilnehmer sich gegenüber der Portalseite personenbezogen authentifiziert,
- bei dem unter Verwendung einer Security Assertion Markup Language dem Funkteilnehmer personenbezogene Authentifizierungsdaten zugeordnet werden, und
- bei dem die personenbezogenen Authentifizierungsdaten bei einem neuen Verbindungsaufbau im Rahmen einer gesicherten Link-Layer-Verbindung an einen AAA-Server zur abschließenden Authentifizierung des Funkteilnehmers übertragen werden.

2. Verfahren nach Anspruch 1, bei dem die Zuordnung der individuellen IP-Adresse durch einen AAA-Server unter Verwendung des "Dynamic Host Configuration Protocol, DHCP" erfolgt.

3. Verfahren nach Anspruch 1, bei dem der Zugriff des Funkteilnehmers auf die Portalseite über eine "Server Only"-Verbindung erfolgt.

4. Verfahren nach Anspruch 1, bei dem die Authentifizierung des Funkteilnehmers gegenüber der Portalseite unter Verwendung eines gesicherten Übertragungsverfahrens erfolgt.

5. Verfahren nach Anspruch 1,
- bei dem die personenbezogene Authentifizierung gegenüber der Portalseite durch Angabe eines auf die Person des Funkteilnehmers bezogenen Benutzernamen und/oder Passwort erfolgt, oder
- bei dem die personenbezogene Authentifizierung gegenüber der Portalseite basierend auf einem Zertifikat erfolgt.

6. Verfahren nach Anspruch 5, bei dem die personenbezogene Authentifizierung gegenüber der Portalseite unter Verwendung des HTTPS-Protokolls gesichert durchgeführt wird.

7. Verfahren nach Anspruch 1, bei dem als Authentifizierungsdaten eine personenbezogene SAML Assertion oder eine personenbezogenes SAML Artefact verwendet wird.

8. Verfahren nach Anspruch 7, bei dem bei der Authentifizierung unter Verwendung der Security Assertion Markup Language die Portalseite als Asserting-Party und der AAA-Server als Relying-Party verwendet wird.

9. Verfahren nach Anspruch 1, bei dem die personenbezogenen Authentifizierungsdaten unter Verwendung des HTTPS-Protokolls zum Funkteilnehmer gesichert übertragen werden.

10. Verfahren nach Anspruch 2, bei dem die Link-Layer-Verbindung zum AAA-Server aufgebaut wird.

11. Verfahren nach Anspruch 1, bei dem die Authentifizierung über die Link-Layer-Verbindung unter Verwendung des EAP-Protokolls durchgeführt wird, wobei ein Heimatnetzwerk, bei dem der Funkteilnehmer bekannt ist, den Funkteilnehmer gegenüber dem anfragenden AAA-Server des WLAN-Netzes authentifiziert.
